Europäisches Patentamt

European Patent Office

Office européen des brevets

(11) Veröffentlichungsnummer: **0 509 388 A1**

# (12) EUROPÄISCHE PATENTANMELDUNG

(21) Anmeldenummer: **92106110.7**

(22) Anmeldetag: **09.04.92**

(51) Int. Cl.5: **B01D 57/02**, G01N 27/26

(30) Priorität: **13.04.91 DE 4112168**

(43) Veröffentlichungstag der Anmeldung:
**21.10.92 Patentblatt 92/43**

(84) Benannte Vertragsstaaten:
**AT BE CH DE DK ES FR GB GR IT LI LU NL PT SE**

(71) Anmelder: **SERVA FEINBIOCHEMICA GmbH & Co. KG**
**Carl-Benz-Strasse 7**
**W-6900 Heidelberg 1(DE)**

(72) Erfinder: **Balshüsemann, Dirk**
**Kurpfalzstrasse 22**
**W-6906 Leimen 3(DE)**
Erfinder: **Berger, Beate**
**Erwin-Rohde-Strasse 8**
**W-6900 Heidelberg(DE)**

(54) **Neue Puffersysteme für die horizontale Gelschicht-Elektrophorese.**

(57) Die Erfindung betrifft neue Puffersysteme für die horizontale Gelschicht-Elektrophorese.

Die vorliegende Erfindung betrifft die elektrophoretische Trennung von Proteinen in einer horizontalen Gelschicht unter Verwendung eines Tris-Taurinat-Puffersystems.

Die Elektrophorese ist ein biochemisches Trennverfahren, bei dem die Wanderung von geladenen Molekülen in einem elektrischen Feld zu deren analytischen oder präparativen Trennung ausgenutzt wird. Zur Trennung von Proteinen wird vor allem die SDS-Polyacrylamid-Gelelektrophorese (SDS-PAGE verwendet). Dabei findet die Trennung in Gegenwart eines Überschußes an Natriumdodecylsulfat (SDS) statt. Diese Form der Elektrophorese kann horizontal oder vertikal durchgeführt werden. Für die horizontale Gelelektrophorese sind entsprechende Gele als Gradientengele auch kommerziell erhältlich (z.B. Pharmacia-LKB, Freiburg).

Aufgabe der vorliegenden Erfindung war es, ein Gelsystem mit verbesserten Trennungseigenschaften bei vereinfachter Herstellungsweise bereitzustellen.

Die hier vorliegende Erfindung beschreibt nun die elektrophoretische Auftrennung von Proteinen in einem diskontinuierlichen, aus jeweils homogenem Sammel- und Trenngel bestehenden System, in dem Taurinat als Folgeion und Tris als Gegenion verwendet wird. Das Leition wird aus einer Reihe von Anionen gewählt, z.B. Acetat, Chlorid, Sulfat oder Phosphat. Vorzugsweise wird Acetat als Leition eingesetzt.

Vorzugsweise wird die Elektrophorese als SDS-Elektrophorese unter Zusatz von Natriumdodecyclsulfat (SDS) durchgeführt.

Zur elektrophoretischen Proteintrennung sind bereits eine Vielzahl kontinuierlicher und diskontinuierlicher Systeme beschrieben worden Hannes, B.D. & Rickwood, D. (hrsg.) Gel electrophoresis of proteins. A practical approach, IRL Press, Oxford, Washington (1992). Diskontinuierliche Systeme konzentrieren die wäßrigen Proben innerhalb einer sogenannten Sammelzone, bevor die eigentliche Auftrennung der Proteine in der Trennzone stattfindet. Durch die Konzentrierung werden schärfere Proteinzonen erzeugt als in kontinuierlichen Systemen. Die Diskontinuität kann sich auf Pufferzusammensetzung, pH-Wert und Gelstärke beziehen; das im folgenden dargestellte System ist in Bezug auf alle drei Parameter diskontinuierlich.

Das hier beschriebene Elektrophoresesystem ist dadurch gekennzeichnet, daß die Trennung in einer O,1 - 1,0 mm, vorzugsweise 0,5 mm, dicken Gelschicht aus Polyacrylamid durchgeführt wird.

Die Polyacrylamidschicht ist fest mit einer hydrophilisierten Trägerfolie oder einem netzartigen Gewebe verbunden und erhält dadurch mechanische Stabilität.

Solche netzartigen Gewebe sind beispielsweise in der deutschen Offenlegungsschrift DE-OS 37 36 087 offenbart, auf die hiermit inhaltlich Bezug genommen wird.

Die Trennzone weist eine Polyacrylamidkonzentration von 7 - 20 % g/v auf, die Sammelzone von 4 - 5 % g/v, vorzugsweise 5 Gew.-%. Der Anteil an Quervernetzer, z.B. N,N'-Methylenbisacrylamid, am Gesamtacrylamid beträgt 0,5 - 5 %, vorzugsweise 4 Gew.-%. Die beanspruchten Konzentrationen, soweit sie in g/v (Gewicht/Volumen) angegeben sind, errechnen sich aus dem Gewicht in Gramm bezogen auf das Gesamtvolumen angegeben in ml.

Sowohl Sammel- als auch Trenngel enthalten Glycerin oder Saccharose zwischen 5 und 40 % g/v, vorzugsweise 30 % g/v (Sammelgel) bzw. 10 % (Trenngel).

Das in Trenn- und Sammelgel identische Puffersystem besteht aus 0,1 - 0,5 mol/l, vorzugsweise 0,25 mol/l Tris (Tris(hydroxymethyl)aminomethan) wobei der pH-Wert 7,0 - 8,0, vorzugsweise 7,5, mit der Säure des gewünschten Anions eingestellt wird.

Zusätzlich enthalten Trenn- und Sammelgel bei der SDS-Elektrophorese noch 0,04 - 0,1 Gew.-%, vorzugsweise 0,06 % SDS.

Der Kathoden-Puffer besteht aus 0,1 - 2 mol/l, vorzugsweise 1,7 mol/l Tris, 0,2 - 0,7 mol/l, vorzugsweise 0,5 mol/l Taurin mit einem pH-Wert von 8,0 bis 9,5, vorzugsweise 9,0.

Der Anodenpuffer besteht wie im Trenn- und Sammelgel aus Tris und dem jeweils gewählten Anion, vorzugsweise Acetat. Bei gleichem pH-Wert wird die Konzentration des Puffers 2,5 fach im Vergleich zur Gelplatte eingestellt.

Bei der SDS-Elektrophorese enthalten Kathoden- und Anodenpuffer 0,1 - 1,0 Gew.-%, vorzugsweise 0,2 % SDS. Anoden- und Kathodenpuffer werden vorzugsweise in Form von mit dem jeweiligen Puffer getränkten Blöcken aus Cellulose- oder Glasfaserpapier zwischen die Gelplatte und die Elektroden plaziert. In diesem Fall werden die Puffer mit einem Gehalt von 30 % Glycerin zur Erhöhung der Viskosität hergestellt. Dadurch wird der unbeabsichtigte Austritt der Pufferflüssigkeiten aus den Papierblöcken verhindert. In einer anderen Ausführungsform werden spezielle Gelstreifen, die ebenfalls die Pufferflüssigkeit enthalten, zur Stromzuführung verwendet. Diese Technik ist beispielsweise in der PCT-Anmeldung WO 87/04948 beschrieben.

Alternativ können die Puffer auch als freie Lösungen in Pufferreservoirs eingesetzt werden. Die Verbindung zur Gelplatte wird dann durch puffergetränkte dünne Papierstreifen hergestellt. In diesem Fall wird auf den Glycerinzusatz verzichtet.

Das Aufbringen der Proben - der zu trennenden Proteine - erfolgt direkt auf das Sammelgel nach an sich bekannten Methoden.

Die elektrophoretische Trennung der Proteine wird durch Anlegen eines Gleichstroms bei einer Spannung von 10 - 50 V/cm in 1,5 - 2,5 h durchgeführt.

Das erfindungsgemäße Verfahren unter Verwendung des beanspruchten Puffersystems ermöglicht eine wesentlich höhere Auflösung der Banden, als dies bei der Verwendung bisher aus dem Stand der Technik bekannter Puffersysteme möglich ist.

Die Fixierung und Färbung der getrennten Proteinbanden erfolgt in an sich bekannter Weise z.B. mit Serva Blau R, Serva Violett 17 oder durch Silberfärbung.

Das nachfolgende Beispiel soll die Erfindung erläutern, ohne sie jedoch einzuschränken. Die Herstellung der Gelplatten ist an sich bekannt, wie es z. B. bei Görg, A., Postel, W., Westermeier, R., Gianazza, Righetti, P.G. (1980) J. Biochem. Biophys. Methods 3, 273 - 284 beschrieben ist.

Beispiel 1

Zusammensetzung eines horizontalen SDS-Gels:

| Sammelgel: (5 % Polyacryl-amid, pH 7,5) | 4,8 g/100 ml | Acrylamid |
| | 0,2 g/100 ml | N,N'-Methylenbisacrylamid |
| | 0,25 M | Tris |
| | 0,20 M | Essigsäure |
| | 0,06 g g/100 ml | SDS |
| | 30 g/100 ml | Glycerin |

| Trenngel (14 % Poly-acrylamid, pH 7,5) | 13,44 g/100 ml | Acrylamid |
| | 0,56 g/100 ml | N,N'-Methylenbisacrylamid |
| | 0,25 M | Tris |
| | 0, 2 M | Essigsäure |
| | 0,06 g/100 ml | SDS |
| | 10 g/100 ml | Glycerin |

| Kathoden-puffer: (pH 9,0) | 1,7 M | Tris |
| | 0,5 M | Taurin |
| | 0,2 g/100 ml | SDS |
| | 30 g/100 ml | Glycerin |

| Anoden-puffer: (pH 7,5) | 0,625 M | Tris |
| | 0,5 M | Essigsäure |
| | 0,2 g/100 ml | SDS |
| | 30 g/100 ml | Glycerin |

**Patentansprüche**

1. Polyacrylamidgel für die horizontale Elektrophorese, enthaltend ein Puffersystem, das Taurinat als Folgeion und Tris als Gegenion enthält, dadurch gekennzeichnet, daß das Leition aus der Gruppe Acetat, Chlorid, Sulfat oder Phosphat ausgewählt ist.

2. Polyacrylamidgel nach Anspruch 1, dadurch gekennzeichnet, daß es aus einem Trenn- und einem Sammelgel besteht.

**3.** Polyacrylamidgel nach Anspruch 1 oder 2, dadurch gekennzeichnet, daß die Konzentration an Tris O,1 - 2,0 mol/l im Puffersystem beträgt.

**4.** Polyacrylamidgel für die horizontale Elektrophorese, enthaltend ein Puffersystem, das Tris als Gegenion und ein Anion aus der Gruppe Acetat, Chlorid, Sulfat oder Phosphat enthält, wobei der pH-Wert zwischen 7,0 und 8,0 eingestellt ist.

**5.** Pufferlösung für die Elektrophorese enthaltend Tris und Taurin, wobei der pH-Wert zwischen 8,5 und 9,5 beträgt.

**6.** Pufferlösung für die Elektrophorese enthaltend Tris, wobei der pH-Wert zwischen 7,0 und 8,0 eingestellt ist.

**7.** Verfahren zur elektrophoretischen Auftrennung von Proteinen, dadurch gekennzeichnet, daß ein diskontinuierliches System aus einem homogenen Sammel- und Trenngel unter Verwendung eines Puffersystems, das Taurin als Folgeion, Tris als Gegenion und als Leition ein Anion aus der Gruppe Acetat, Chlorid, Sulfat und Phosphat enthält, verwendet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 246 084 (BECKMAN INSTRUMENTS, INC.) <br> * Zusammenfassung * <br> --- | 6 | B01D57/02 <br> G01N27/26 |
| A | US-A-4 415 655 (TECHAMERICA GROUP, INC.) <br><br> * Zusammenfassung * <br> * Spalte 4, Zeile 7 - Zeile 18 * <br> * Spalte 4, Zeile 26 - Spalte 5, Zeile 27 * <br> * Ansprüche 1-4; Beispiele * <br> --- | 1,2,4,5, 7 | |
| A | US-A-4 279 724 (M.T.W.HEARN ET AL.) <br> * Zusammenfassung * <br> * Spalte 1, Zeile 57 - Zeile 68 * <br> * Beispiele 1,3,5,7,8; Tabelle 1 * <br> * Ansprüche 1,9 * <br> --- | 1,3-7 | |
| A | US-A-3 578 604 (CENTRE NATIONAL DE LA RECHERCHE SCIENTIFIQUE) <br> * Zusammenfassung * <br> * Spalte 2, Zeile 37 - Zeile 58 * <br> * Ansprüche 1,6,7; Beispiel 1 * <br> --- | 1,3-7 | **RECHERCHIERTE SACHGEBIETE (Int. Cl.5 )** |
| A | JOURNAL OF CHROMATOGRAPHY. <br> Bd. 359, 1986, AMSTERDAM NL <br> Seiten 157 - 168; <br> T.W.HUTCHENS ET AL.: 'DEVELOPMENT OF FOCUSING BUFFER SYSTEMS FOR GENERATION OF WIDE-RANGE pH GRADIENTS DURING HIGH-PERFORMANCE CHROMATOFOCUSING' <br> * das ganze Dokument * <br> --- | 1,3-7 | B01D <br> G01N <br> C07K |
| P,X | DE-A-4 127 546 (B.MICHOV) 5. März 1992 <br> * das ganze Dokument * <br><br> ----- | 1-7 | |

Der vorliegende Recherchenbericht wurde für alle Patentansprüche erstellt

| Recherchenort | Abschlußdatum der Recherche | Prüfer |
|---|---|---|
| DEN HAAG | 23 JULI 1992 | STEVNSBORG N. |